# EUROPÄISCHE PATENTANMELDUNG

(11) **EP 4 360 418 A1**
(43) Veröffentlichungstag der Anmeldung: **01.05.2024**
(21) Anmeldenummer: 23189002.1
(22) Anmeldetag: 01.08.2023
(51) Int. Cl.: A01B 69/00, A01D 41/127, G06V 20/64

(54) **LANDWIRTSCHAFTLICHE ARBEITSMASCHINE**

(30) Priorität: 28.10.2022 DE 102022128699
(71) Anmelder: CLAAS Selbstfahrende Erntemaschinen GmbH, 33428 Harsewinkel (DE)
(72) Erfinder: Barther, Marvin, 33803 Steinhagen (DE); Neitemeier, Dennis, 59510 Lippetal (DE); Fischer, Frédéric, 59823 Arnsberg (DE); Heufekes, Maik, 48147 Münster (DE); Witte, Johann, 58730 Fröndenberg (DE)
(74) Vertreter: CLAAS Gruppe

(57) **Zusammenfassung**

Die vorliegende Erfindung betrifft eine landwirtschaftliche Arbeitsmaschine (1), insbesondere selbstfahrende Erntemaschine.

Die vorliegende Erfindung beruht auf dem allgemeinen Gedanken, mittels einer zweidimensionalen Projektion eines dreidimensionalen Modells eines Vorsatzgerätes (2) in den Bildern (14) einen Bildbereich (15), insbesondere wenigstens einen Bildbereich oder mehrere Bildbereiche, bezüglich des Vorsatzgerätes (2) zu erkennen.

## Beschreibung

Die vorliegende Erfindung betrifft eine landwirtschaftliche Arbeitsmaschine, insbesondere selbstfahrende Erntemaschine, gemäß dem Oberbegriff von Anspruch 1.

Landwirtschaftliche Arbeitsmaschinen, zu denen insbesondere selbstfahrende Erntemaschinen wie Mähdrescher und Feldhäcksler zählen, weisen regelmäßig als Vorsatzgerät eine Erntegutbergungsanordnung auf, mit der Erntegut im Feldbestand abgetrennt und zur weiteren Verarbeitung im Mähdrescher aufgenommen werden kann. Eine Erntegutbergungsanordnung ihrerseits weist regelmäßig eine Vielzahl von einzelnen Komponenten auf, welche mit unterschiedlichen Einstellungsparametern betrieben werden können. Beispiele für solche Komponenten sind bei einem Mähdrescher eine Erntegutaufnahmevorrichtung in Form einer Haspel, eine Erntegutschneidvorrichtung in Form eines Schneidwerkstisches mit einem Messerbalken, eine Erntegutfördervorrichtung in Form einer Förderschnecke, insbesondere Querförderschnecke, und eine Ernteguteinzugsvorrichtung in Form eines Schrägförderers. Bei einem Mähdrescher kann beispielsweise die Lage (Schnitthöhe, Position) und Drehzahl der Haspel sowie die Geschwindigkeit der Querförderschnecke und des Schrägförderers eingestellt werden. Auf diese Weise lässt sich der Erntegutstrom innerhalb der Erntegutbergungsanordnung beeinflussen. Weiteren Einfluss auf den Erntegutstrom innerhalb der Erntegutbergungsanordnung hat die Fahrgeschwindigkeit der Erntemaschine, da auf diese Weise die aufgenommene Erntegutmenge beeinflusst wird, die von der Erntegutbergungsanordnung verarbeitet wird.

Die DE 10 2016 118 244 A1 betrifft eine landwirtschaftliche Arbeitsmaschine, insbesondere eine selbstfahrende Erntemaschine, mit einer Erntegutbergungsvorrichtung, die eine Erntegutschneidvorrichtung, eine Erntegutaufnahmevorrichtung und/oder eine Ernteguteinzugsvorrichtung, und zumindest eine Erntegutfördervorrichtung aufweist, und ein Bildverarbeitungssystem, eine Datenausgabeeinheit, und mindestens ein der Erntegutbergungsvorrichtung zugeordnetes Sensorsystem zur Erfassung eines Erntegutflusses in der Erntegutbergungsvorrichtung umfassend, wobei das Sensorsystem zur Übertragung von den Bildern an das Bildverarbeitungssystem gekoppelt ist, wobei die von dem Sensorsystem generierten Bilder an das Bildverarbeitungssystem übergeben werden, wobei das Bildverarbeitungssystem eine Auswahl verfügbarer Bilder verarbeitet, wobei das Bildverarbeitungssystem die übertragenden Bilder in einem ersten Schritt vorverarbeitet, in einem weiteren Schritt aus den vorverarbeiteten Bildern einen optischen Fluss und korrespondierende Vektorfelder ermittelt, und in einem folgenden Schritt aus den korrespondierenden Vektorfeldern Gutflussgeschwindigkeitsverläufe des Erntegutflusses ableitet und bewertet.

Die DE 10 2018 122 698 A1 betrifft ein Verfahren zum Betrieb einer selbstfahrenden Erntemaschine, umfassend die folgenden Verfahrensschritte: a) Erntegut wird mittels eines Schneidwerks geschnitten und ausgehend von dem Schneidwerk mittels eines Schrägförderers in Richtung eines Arbeitsorgans geführt, mittels dessen das Erntegut bearbeitbar ist; b) mittels mindestens einer Kamera werden innerhalb eines zumindest einen Teil des Schneidwerks und/oder des Schrägförderers beinhaltenden Erfassungsbereichs, den die Kamera optisch erfasst, sukzessive Bilder aufgenommen; c) die Bilder werden mittels mindestens einer Auswerteinheit ausgewertet, wobei zumindest zwei aufeinander folgende Bilder derart verarbeitet werden, dass Veränderungen, die in einem Zeitraum zwischen den Aufnahmen der Bilder aufgetreten sind, ermittelt werden; d) in mindestens einem der auszuwertenden Bilder wird mindestens eine in beiden Bildern enthaltene Referenzregion identifiziert; e) anhand einer Analyse der Referenzregion in beiden Bildern wird ein statischer Anteil einer zwischen den Bildern vorliegenden Gesamtveränderung ermittelt.

Die DE 10 2020 121 857 A1 betrifft eine landwirtschaftliche Arbeitsmaschine mit einem Sensorsystem, wobei das Sensorsystem zumindest einen Lidarsensor, eine Kamera und eine Recheneinheit umfasst, wobei der Lidarsensor und die Kamera jeweils einen Umfeldbereich der Arbeitsmaschine erfassen, wobei der Lidarsensor und die Kamera zumindest teilweise denselben Umfeldbereich der Arbeitsmaschine erfassen, wobei der Lidarsensor Sensordaten an die Recheneinheit überträgt und die Kamera Bilddaten an die Recheneinheit überträgt, wobei die Recheneinheit dazu vorgesehen und eingerichtet ist die Sensordaten in Segmente zu segmentieren und die Segmente zu klassifizieren, wobei die Recheneinheit dazu vorgesehen und eingerichtet ist zumindest einem mehrdeutig klassifizierten Segment Bilddaten zuzuordnen und die Klassifizierung des Segments anhand der Bilddaten zu verbessern, wobei die Bilddaten zumindest einen Teil desselben Umfeldbereichs der Arbeitsmaschine wie das mehrdeutig klassifizierte Segment zeigen.

Die DE 10 2018 116 990 A1 betrifft eine landwirtschaftliche Arbeitsmaschine, insbesondere Erntemaschine, mit einer Erntegutbergungsanordnung zum Abtrennen und Aufnehmen von Erntegut aus einem Feldbestand, die als Komponenten zumindest eine Erntegutschneidvorrichtung, eine dieser nachgeordnete Erntegutfördervorrichtung und eine dieser nachgeordnete Ernteguteinzugsvorrichtung aufweist, und mit einer Regelungseinrichtung, die zumindest eine Sensoreinheit zur optischen Erfassung eines Erntegutstroms, eine Bildverarbeitungseinheit zur Verarbeitung von Bildern, die von der Sensoreinheit basierend auf dem optisch erfassten Erntegutstrom erzeugt werden, und eine Datenausgabeeinheit zur Ausgabe der von der Bildverarbeitungseinheit verarbeiteten Bilder aufweist, wobei die Bildverarbeitungseinheit basierend auf den von der Sensoreinheit erzeugten Bildern ein Geschwindigkeitskennfeld erstellt, wobei die Bildverarbeitungseinheit dazu konfiguriert ist, basierend auf den von der Sensoreinheit erzeugten Bildern zusätzlich zu dem Geschwindigkeitskennfeld ein Richtungsänderungskennfeld zu erstellen, und dass die beiden Kennfelder gemeinschaftlich oder jedes einzeln von der Regelungseinrichtung zur Regelung von Prozessen in der landwirtschaftlichen Arbeitsmaschine und/oder in der Erntegutbergungsanordnung herangezogen werden.

Die DE 10 2018 121 031 A1 betrifft eine landwirtschaftliche Arbeitsmaschine, insbesondere Erntemaschine, mit einem Vorsatzgerät zur Durchführung landwirtschaftlicher Arbeit und mit einer Regelungseinrichtung, die zumindest eine Sensoreinheit zur sensorischen Erfassung eines Erntegutstroms im und/oder um das Vorsatzgerät und eine Bildverarbeitungseinheit zur Verarbeitung von Bildern, die von der Sensoreinheit basierend auf dem sensorisch erfassten Erntegutstrom erzeugt werden, aufweist, wobei die Regelungseinrichtung konfiguriert ist, Regionen gleicher Charakteristik, Komponenten des Vorsatzgeräts und Eigenschaften des Erntegutstroms zu erkennen, und das jeweils Erkannte zur Steuerung und/oder Regelung von Prozessabläufen in der landwirtschaftlichen Arbeitsmaschine zu nutzen.

Der vorliegenden Erfindung liegt die Aufgabe zugrunde, eine verbesserte oder zumindest eine alternative Ausführungsform einer eine landwirtschaftliche Arbeitsmaschine, insbesondere Erntemaschine, anzugeben, wobei insbesondere eine Ermittlung von Komponenten eines Vorsatzgeräts verbessert wird.

Die vorliegende Erfindung beruht auf dem allgemeinen Gedanken, mittels einer zweidimensionalen Projektion eines dreidimensionalen Modells eines Vorsatzgerätes in Bildern einen Bildbereich, insbesondere wenigstens einen Bildbereich oder mehrere Bildbereiche, bezüglich des Vorsatzgerätes zu erkennen.

Die erfindungsgemäße landwirtschaftliche Arbeitsmaschine, insbesondere eine selbstfahrende Erntemaschine, zu denen insbesondere Mähdrescher und/oder Feldhäcksler zählen, weist ein Vorsatzgerät zur Durchführung landwirtschaftlicher Arbeit und eine Regelungseinrichtung auf. Die Regelungseinrichtung weist zumindest eine Sensoreinheit zur sensorischen, insbesondere optischen, Erfassung des Vorsatzgerätes und eine Bildverarbeitungseinheit zur Verarbeitung von Bildern, die von der Sensoreinheit erzeugt werden und/oder wurden, auf.

Die Bildverarbeitungseinheit ist konfiguriert, insbesondere dazu vorgesehen und eingerichtet, mittels einer zweidimensionalen Projektion eines dreidimensionalen Modells des Vorsatzgerätes in den Bildern einen Bildbereich, insbesondere wenigstens einen Bildbereich oder mehrere Bildbereiche, bezüglich des Vorsatzgerätes zu erkennen. Die Regelungseinrichtung ist konfiguriert, insbesondere dazu vorgesehen und eingerichtet, den erkannten Bildbereich, insbesondere wenigstens einen oder mehreren erkannten Bildbereiche, zur Steuerung und/oder Regelung von Prozessabläufen in der landwirtschaftlichen Erntemaschine zu nutzen. Ein mittels der Bildverarbeitungseinheit erkannter Bildbereich kann eine Region of Interest (ROI) sein. Die Bildverarbeitungseinheit kann wenigstens dreidimensionales Modell eines Vorsatzgerätes und/oder mehrere dreidimensionale Modelle mehrerer Vorsatzgeräte aufweisen.

Mit einem "Erkennen" der besagten Bildbereiche ist bevorzugt nicht bloß ein Ermitteln von Bereichen gemeint, sondern auch ein eindeutiges Identifizieren des jeweiligen Bereichs, das heißt eine Zuordnung des Bereichs zu einer Funktion und/oder Eigenschaft und/oder einer Komponente des Vorsatzgerätes. Die einzelnen Bereiche können somit nicht nur aufgrund ihrer Lage, sondern auch aufgrund ihrer Funktion und/oder Eigenschaft voneinander unterschieden werden. Dadurch wird ermöglicht, ermittelte Bewegungen zu differenzieren.

Auf Basis der erkannten Bildbereiche können gemäß einem ablaufenden Steuerungs- und/oder Regelungsprozess Prozessabläufe in der landwirtschaftlichen Arbeitsmaschine gesteuert und/oder geregelt werden. Hierdurch lässt sich beispielsweise das Verhalten des Vorsatzgeräts und/oder des darin entlang geführten Erntegutstroms besonders differenziert betrachten und analysieren. Entsprechend wird die Überwachung eines Vorsatzgeräts, insbesondere einer Erntegutbergungsanordnung, hinsichtlich der Genauigkeit, Zuverlässigkeit und Rechtzeitigkeit weiter verbessert.

Bei einer vorteilhaften Weiterbildung der erfindungsgemäßen Lösung ist vorgesehen, dass das Vorsatzgerät Sensorvorrichtungen, insbesondere nicht-optische Sensorvorrichtungen, zur Erfassung von Einstellungsparametern des Vorsatzgerätes aufweist, und die Bildverarbeitungseinheit konfiguriert, insbesondere dazu vorgesehen und eingerichtet, ist, eine Positionierung des Vorsatzgerätes bezüglich der Sensoreinheit basierend auf den Einstellungsparametern des Vorsatzgerätes zu ermitteln und darauf basierend Komponenten des Vorsatzgeräts mittels der zweidimensionalen Projektion des dreidimensionalen Modells des Vorsatzgerätes, insbesondere innerhalb der Bilder, für die Regelungseinrichtung zu erkennen. Hierdurch wird beispielsweise die Ermittlung von Komponenten des Vorsatzgeräts in den Bildern trotz einer durch Staub stark beeinträchtigten Sicht ermöglicht und/oder verbessert.

Bei einer vorteilhaften Weiterbildung der erfindungsgemäßen Lösung ist vorgesehen, dass die Bildverarbeitungseinheit konfiguriert, insbesondere dazu vorgesehen und eingerichtet, ist, einen Bildbereich, insbesondere wenigstens einen oder mehreren erkannten Bildbereiche, bezüglich einer Komponente des Vorsatzgeräts und/oder einen Bildbereich, insbesondere wenigstens einen oder mehreren erkannten Bildbereiche, bezüglich eines Teil einer Komponente des Vorsatzgeräts zu erkennen.

Bei einer vorteilhaften Weiterbildung der erfindungsgemäßen Lösung ist vorgesehen, dass die Bildverarbeitungseinheit konfiguriert, insbesondere dazu vorgesehen und eingerichtet, ist, Bildbereiche bezüglich optisch nicht erfassbarer, jedoch im Sichtbereich des Bildes positionierter Komponenten des Vorsatzgeräts zu erkennen. Beispielsweise kann eine Tischkante eines Schneidwerkstisches aufgrund des Erntegutstromes und/oder anderen Komponenten des Vorsatzgeräts zwar optisch nicht erfassbarer sein, jedoch können für diese Tischkante mittels der zweidimensionalen Projektion des dreidimensionalen Modells des Vorsatzgerätes Bildbereiche erkannt werden.

Bei einer vorteilhaften Weiterbildung der erfindungsgemäßen Lösung ist vorgesehen, dass die Bildverarbeitungseinheit konfiguriert, insbesondere dazu vorgesehen und eingerichtet, ist, als eine Komponente eine Erntegutaufnahmevorrichtung, insbesondere Haspel, des Vorsatzgeräts zu ermitteln und insbesondere als Erntegutaufnahmevorrichtung, insbesondere Haspel, zu identifizieren, und/oder als eine Komponente eine Erntegutschneidvorrichtung, insbesondere einen Schneidwerkstisch, des Vorsatzgeräts zu ermitteln und insbesondere als Erntegutschneidvorrichtung, insbesondere Schneidwerkstisch, zu identifizieren, und/oder als eine Komponente eine Erntegutfördervorrichtung, insbesondere Förderschnecke, des Vorsatzgeräts zu ermitteln und insbesondere als Erntegutfördervorrichtung, insbesondere Förderschnecke, zu identifizieren, und/oder als eine Komponente eine Ernteguteinzugsvorrichtung, insbesondere einen Schrägförderer, des Vorsatzgeräts zu ermitteln und insbesondere als Ernteguteinzugsvorrichtung, insbesondere Schrägförderer, zu identifizieren, und/oder als eine Komponente eine Erntegutschneidvorrichtung, insbesondere eine Schneidwerkskante, des Vorsatzgeräts zu ermitteln und insbesondere als Erntegutschneidvorrichtung, insbesondere Schneidwerkskante, zu identifizieren.

Bei einer vorteilhaften Weiterbildung der erfindungsgemäßen Lösung ist vorgesehen, dass das Vorsatzgerät eine Haspel aufweist, einen Schneidwerkstisch, eine Förderschnecke und einen Schrägförderer aufweist. Das Vorsatzgerät kann einen Schneidwerkskantenbereich aufweisen.

Bei einer vorteilhaften Weiterbildung der erfindungsgemäßen Lösung ist vorgesehen, dass der Schneidwerkstisch ein verstellbarer Schneidwerkstisch ist, und/oder dass der Schneidwerkstisch einen Messerbalken aufweist.

Bei einer vorteilhaften Weiterbildung der erfindungsgemäßen Lösung ist vorgesehen, dass die Einstellungsparameter des Vorsatzgerätes einen Höhenparameter und/oder Winkelparameter der Ernteguteinzugsvorrichtung, insbesondere des Schrägförderers, aufweisen, und/oder die Einstellungsparameter des Vorsatzgerätes einen Höhenparameter und/oder Winkelparameter der Erntegutaufnahmevorrichtung, insbesondere der Haspel, aufweisen, und/oder die Einstellungsparameter des Vorsatzgerätes einen Höhenparameter und/oder Winkelparameter und/oder Längenparameter der Erntegutschneidvorrichtung, insbesondere des Schneidwerkstisches und/oder der Schneidwerkskante, aufweisen, und/oder die Einstellungsparameter des Vorsatzgerätes einen Höhenparameter und/oder Winkelparameter der Erntegutfördervorrichtung, insbesondere der Förderschnecke, aufweisen.

Bei einer vorteilhaften Weiterbildung der erfindungsgemäßen Lösung ist vorgesehen, dass der Winkelparameter einen Längswinkel bezüglich einer Fahrrichtung der selbstfahrenden landwirtschaftlichen Erntemaschine aufweist, und/oder dass der Winkelparameter einen Querwinkel bezüglich einer Querachse der selbstfahrenden landwirtschaftlichen Erntemaschine aufweist. Die Querachse kann senkrecht zur Fahrrichtung und/oder senkrecht zur Erdanziehungskraftrichtung ausgerichtet sein.

Bei einer vorteilhaften Weiterbildung der erfindungsgemäßen Lösung ist vorgesehen, dass die Sensoreinheit zur sensorischen Erfassung eines Erntegutstroms im und/oder um das Vorsatzgerät konfiguriert, insbesondere dazu vorgesehen und eingerichtet, ist, und die Regelungseinrichtung konfiguriert, insbesondere dazu vorgesehen und eingerichtet, ist, Regionen gleicher Charakteristik, Komponenten des Vorsatzgeräts und Eigenschaften des Erntegutstroms zu erkennen, und das jeweils Erkannte zur Steuerung und/oder Regelung von Prozessabläufen in der landwirtschaftlichen Arbeitsmaschine zu nutzen.

Eine Region gleicher Charakteristik ist beispielsweise der nicht-abgeerntete Feldbestand in Fahrtrichtung vor dem Vorsatzgerät, eine weitere Region gleicher Charakteristik ist beispielsweise der abgeerntete Feldbestand (Stoppelfeld) hinter dem Vorsatzgerät. Auch Gutflussregionen gleicher Charakteristik können davon umfasst sein, wobei beispielsweise eine Region gleicher Charakteristik von dem Erntegutstrom innerhalb der Erntegutaufnahmevorrichtung, insbesondere Haspel, und eine andere Region gleicher Charakteristik von dem Erntegutstrom vertikal oberhalb der Erntegutschneidvorrichtung, insbesondere vertikal oberhalb des Schneidwerkstisches, insbesondere in dem Bereich zwischen der Erntegutaufnahmevorrichtung bzw. Haspel und der Erntegutfördervorrichtung, insbesondere Förderschnecke, gebildet wird. Neben diesen Bereichen, die durch das Vorhandensein von überwiegend Biomasse (Erntegut, Feldbestand) innerhalb des Bereichs gekennzeichnet sind, handelt es sich bei weiteren Bereichen um Komponenten des Vorsatzgeräts, die über einen von der Sensoreinheit sensorisch erfassbaren Oberflächenabschnitt eines Maschinenteils der Komponente verfügen. Zusätzlich zu diesen Bereichen erfolgt vorschlagsgemäß eine Erkennung von Eigenschaften des Erntegutstroms, beispielsweise von Gutflussgeschwindigkeiten des Erntegutstroms oder Abschnitten davon und/oder einem Gutstau.

Beispielsweise kann mit dem Erkennen der Region mit dem Feldbestand vor dem Vorsatzgerät gemeint sein, dass durch eine sensorische Erfassung und Bildverarbeitung zunächst ein Bereich detektiert bzw. verortet wird und anschließend dieser Bereich als ein konkreter Bereich mit einer bestimmten Funktion und/oder Eigenschaft, beispielsweise konkret als Feldbestand vor dem Vorsatzgerät, identifiziert wird.

Bei einer vorteilhaften Weiterbildung der erfindungsgemäßen Lösung ist vorgesehen, dass die Bildverarbeitungseinheit konfiguriert, insbesondere dazu vorgesehen und eingerichtet, ist, bezüglich wenigstens einer Komponente des Vorsatzgeräts basierend auf den von der Sensoreinheit erzeugten Bildern ein Verfahren zur Ermittlung einer Sichtbeeinträchtigung anzuwenden.

Sensoren, mit denen das Umfeld analysiert werden soll, werden von Umgebungseinflüssen wie beispielsweise Beleuchtungsänderungen und/oder Staub beeinflusst. Beleuchtungsänderungen können beispielsweise durch Sonnenstrahlung, Nebel, Staub und/oder Regen entstehen. Durch das Erfassen und/das Ermitteln der Sichtbeeinträchtigung durch Umgebungseinflüsse können Signalverarbeitungsalgorithmen die Signale zusätzlich verarbeiten, um Beleuchtungseinflüsse oder Staubeinflüsse zu minimieren, oder Signale als stark verrauscht bzw. unbrauchbar einzustufen. Auf letzteres könnten auch Meldungen über die temporäre Funktionseinschränkung der optischen Sensorik generiert werden.

Es kann vorgesehen sein, dass die ermittelte Sichtbeeinträchtigung zur Gewichtung der erkannten Regionen gleicher Charakteristik und/oder erkannten Eigenschaften des Erntegutstroms zu verwenden. Hierdurch können Regionen gleicher Charakteristik und/oder erkannten Eigenschaften des Erntegutstroms bezüglich Umgebungseinflüssen gefiltert und verarbeitet werden. Ferner kann eine Einstufung der Bilder und/oder Bildbereiche mittels einem Unsicherheitsfaktor erfolgen, der angibt dieses Bild verrauscht ist und zu welchem Grad dementsprechend diesem Bild und der daraus abgeleiteten Informationen vertraut werden kann.

Dieser Unsicherheitsfaktor kann bei der Datenverarbeitung der Sensordaten genutzt werden. Beispielsweise können die aktuellen Sensordaten aufgrund des Unsicherheitsfaktors gegenüber historischen Daten passend gewichtet werden. Wird nicht nur eine große, sondern auch mehrere kleinere Regionen bzw. Bildbereiche betrachtet, so lassen sich auch mehrere lokale Unsicherheitsfaktoren ermitteln, mit den die aktuellen Sensordaten untereinander korrigiert bzw. interpoliert werden können.

Sollten die Unsicherheitsfaktoren zu groß werden, können auch entsprechende Warnungen an den Fahrer gesendet werden oder auch automatische Maschineneinstellungen vorgenommen werden, um entsprechende Umgebungseinflüsse zu verringern.

Bei einer vorteilhaften Weiterbildung der erfindungsgemäßen Lösung ist vorgesehen, dass die Bildverarbeitungseinheit konfiguriert, insbesondere dazu vorgesehen und eingerichtet, ist, bezüglich wenigstens einer Komponente des Vorsatzgeräts, basierend auf den von der Sensoreinheit erzeugten Bildern ein Verfahren zur Ermittlung einer Sichtbeeinträchtigung bezüglich Staub und/oder Beleuchtung anzuwenden. Hierbei kann eine Staubermittlung, insbesondere eine Staubmengenermittlung und/oder Staubdetektion, insbesondere Staubdetektion, und/oder Beleuchtung, insbesondere Beleuchtungsdetektion, anzuwenden. Bei einer vorteilhaften Weiterbildung der erfindungsgemäßen Lösung ist vorgesehen, dass die Bildverarbeitungseinheit konfiguriert ist, zur Ermittlung der Regionen und/oder Komponenten und/oder Eigenschaften des Erntegutstroms basierend auf den von der Sensoreinheit erzeugten Bildern ein Verfahren zur Geschwindigkeitskennfeldermittlung anzuwenden. Bei einer vorteilhaften Weiterbildung der erfindungsgemäßen Lösung ist vorgesehen, dass die Bildverarbeitungseinheit konfiguriert ist, bei dem Verfahren der Geschwindigkeitskennfeldermittlung basierend auf den von der Sensoreinheit erzeugten Bildern ein Geschwindigkeitskennfeld zu erzeugen, das Gutflussgeschwindigkeiten und/oder Geschwindigkeiten von Oberflächenabschnitten von Maschinenteilen der Komponenten des Vorsatzgeräts aufweist.

Bei einer vorteilhaften Weiterbildung der erfindungsgemäßen Lösung ist vorgesehen, dass die Sensoreinheit zur sensorischen Erfassung des Erntegutstroms und/oder des Vorsatzgeräts mindestens einen optischen Sensor, insbesondere mindestens eine Kamera, und/oder mindestens einen Lidar-, Radar- und/oder Ultraschallsensor aufweist.

Bei einer vorteilhaften Weiterbildung der erfindungsgemäßen Lösung ist vorgesehen, dass wenigstens zwei, insbesondere vier, voneinander beabstandete Sensoreinheiten zur sensorischen Erfassung des Erntegutstroms und/oder des Vorsatzgeräts ausgebildet sind.

Ferner betrifft die Erfindung eine Bildverarbeitungseinheit einer zuvor und nachfolgend beschrieben landwirtschaftlichen Arbeitsmaschine. Diese Bildverarbeitungseinheit ist dazu konfiguriert, insbesondere dazu vorgesehen und eingerichtet, mittels einer zweidimensionalen Projektion eines dreidimensionalen Modells des Vorsatzgerätes in den Bildern einen Bildbereich bezüglich eines Vorsatzgerätes der landwirtschaftlichen Arbeitsmaschine zu erkennen.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine vorschlagsgemäße selbstfahrende landwirtschaftliche Arbeitsmaschine,
- Fig. 2: eine schematische Seitenansicht der vorschlagsgemäßen landwirtschaftlichen Arbeitsmaschine sowie eine Detailansicht des Vorsatzgeräts der landwirtschaftlichen Arbeitsmaschine,
- Fig. 3: eine schematische Vorderansicht der vorschlagsgemäßen landwirtschaftlichen Arbeitsmaschine mit dem Vorsatzgerät,
- Fig. 4: eine schematische Darstellung a) eines von der Sensoreinheit der vorschlagsgemäßen landwirtschaftlichen Arbeitsmaschine erzeugten Bildes mit dem Vorsatzgerät und b) des Bildes nach einer Verarbeitung durch die Bildverarbeitungseinheit.

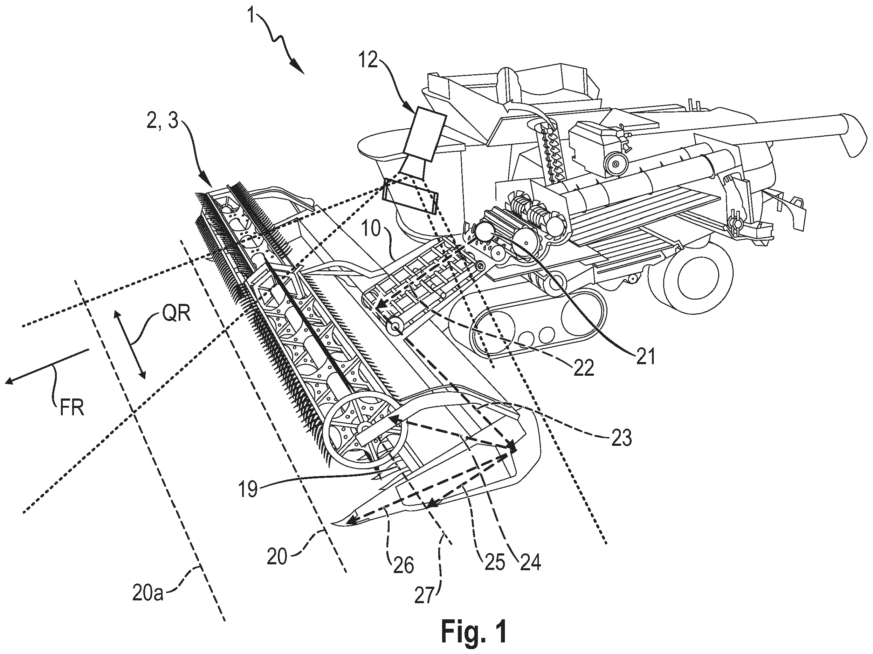

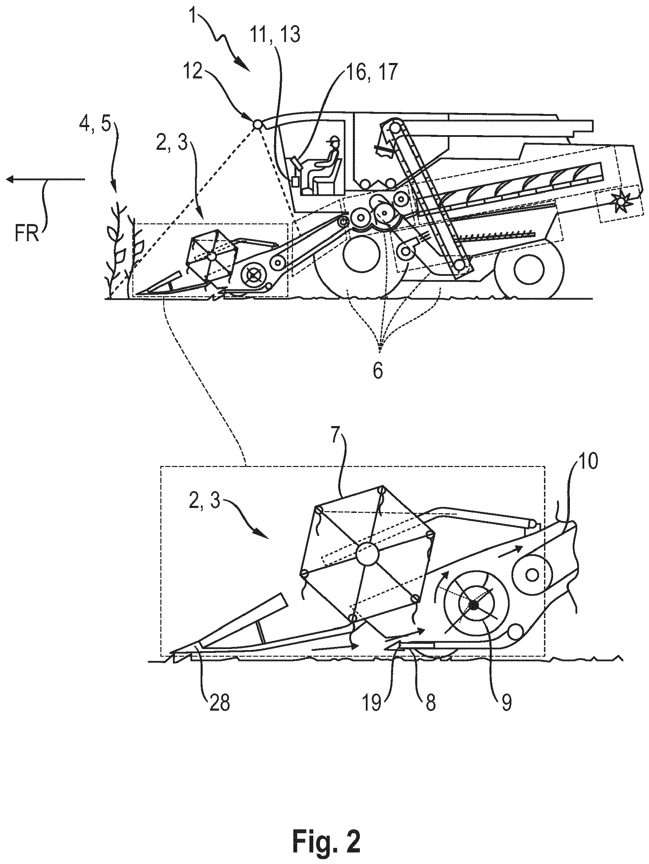

Die Fig. 1 und Fig. 2 zeigen eine vorschlagsgemäße landwirtschaftliche Arbeitsmaschine 1, bei der es sich hier beispielhaft um einen Mähdrescher handelt, und weist als Vorsatzgerät 2 eine Erntegutbergungsanordnung auf, die hier von einem Schneidwerk 3 gebildet wird und in Fahrtrichtung FR vorne an der landwirtschaftlichen Arbeitsmaschine 1 angeordnet ist. Die Erntegutbergungsanordnung 2 bzw. das Schneidwerk 3 dient dem Abtrennen und Aufnehmen von Erntegut 4 aus einem Feldbestand 5, wobei das Erntegut 4 einer weiteren Verarbeitung durch mehrere weitere Arbeitsorgane 6 der landwirtschaftlichen Arbeitsmaschine 1 zugeführt wird. Die weiteren Ausführungen am Beispiel der Erntegutbergungsanordnung 2 sind nicht auf diesen Anwendungsfall beschränkt, sondern gelten sinngemäß auch für andere Vorsatzgeräte 2, beispielsweise einen Erntevorsatz eines Feldhäckslers.

Die Erntegutbergungsanordnung 2 weist als Komponenten hier und vorzugsweise jedenfalls eine Erntegutaufnahmevorrichtung 7 in Form einer Haspel, eine Erntegutschneidvorrichtung 8 in Form eines Schneidwerkstisches mit einem Messerbalken, eine dieser prozesstechnisch nachgeordnete Erntegutfördervorrichtung 9 in Form einer Förderschnecke, insbesondere Querförderschnecke, und eine dieser wiederum prozesstechnisch nachgeordnete Ernteguteinzugsvorrichtung 10 in Form eines Schrägförderers auf. Die Komponente 18 bildete einen Schneidwerkskantenbereich aus. Die Schneidwerkskante und/oder der Schneidwerkskantenbereich kann zumindest teilweise zwischen dem Schrägförderer und der Haspel positioniert sein.

Bei der vorschlagsgemäßen landwirtschaftlichen Arbeitsmaschine 1 wird das Erntegut 4 als Erntegutstrom (in Fig. 2 durch Pfeile dargestellt) durch die Erntegutbergungsanordnung 2 geführt. Hier und vorzugsweise wird das Erntegut 4 über die Erntegutaufnahmevorrichtung 7 bzw. Haspel aufgenommen und gehalten, während es von der Erntegutschneidvorrichtung 8 abgetrennt wird. Das abgetrennte Erntegut 4 wird dann gegen die hier und vorzugsweise quer verlaufende Erntegutfördervorrichtung 9 bewegt und von dieser in Querrichtung, das heißt quer zur Fahrrichtung, insbesondere bezüglich einer Querachse QA, zur Fahrzeugmitte hin gefördert, wo es dann von der Ernteguteinzugsvorrichtung 10 eingezogen und weiter ins Innere der landwirtschaftlichen Arbeitsmaschine 1 gefördert wird.

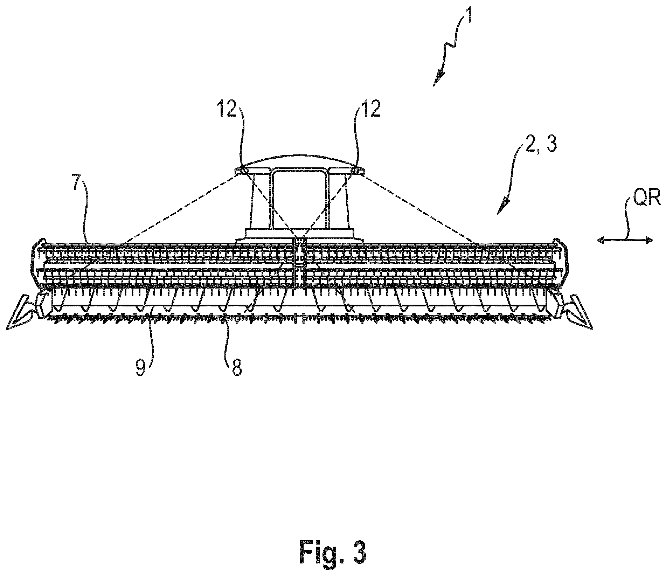

Die landwirtschaftliche Arbeitsmaschine 1 weist ferner eine Regelungseinrichtung 11 auf, die hier und vorzugsweise dazu dient, neben den genannten Komponenten der Erntegutbergungsanordnung 2 auch die weiteren Arbeitsorgane 6 der landwirtschaftlichen Arbeitsmaschine 1 zu regeln. Die Regelung kann Geschwindigkeits- bzw. Drehzahlregelungen und/oder Höhenverstellungen und/oder Positionsverstellungen und/oder Winkelverstellungen umfassen. Auch kann hier und vorzugsweise über die Regelungseinrichtung 11 die Fahrgeschwindigkeit der landwirtschaftlichen Arbeitsmaschine 1 geregelt. Die Regelungseinrichtung 11 weist hier und vorzugsweise eine Sensoreinheit 12 in Form wenigstens einer Kamera auf, wobei die Sensoreinheit 12 im Frontbereich der landwirtschaftlichen Arbeitsmaschine 1, insbesondere auf und/oder innerhalb der Fahrerkabine der landwirtschaftlichen Arbeitsmaschine 1, angeordnet ist und der optischen Erfassung des Vorsatzgerätes 2 und/oder des Erntegutstroms dient. Der Bereich der optischen Erfassung ist symbolisch in den Fig. 1, Fig. 2 und Fig. 3 gestrichelt dargestellt, wobei in der Fig. 3 die landwirtschaftlichen Arbeitsmaschine 1 zwei voneinander beabstandete Sensoreinheiten 12 in Form von Kameras aufweist.

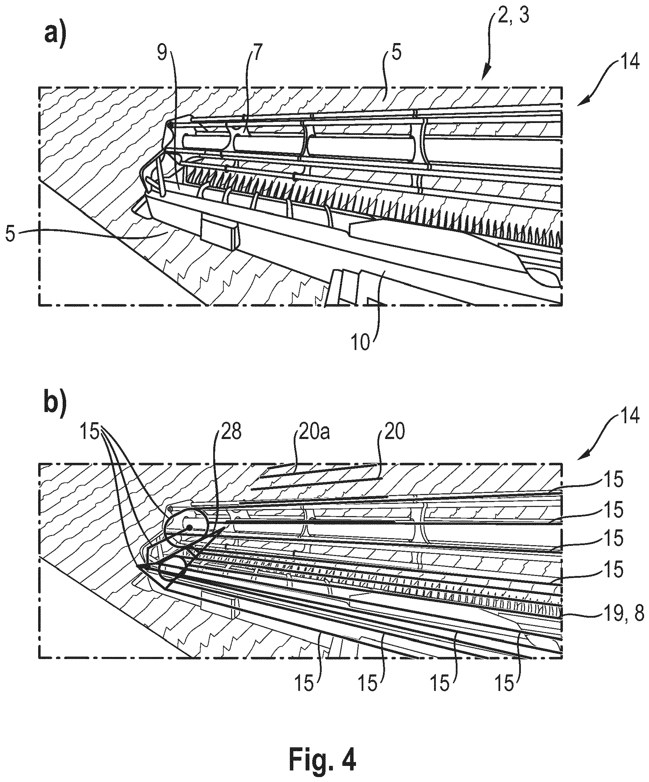

Weiter weist die Regelungseinrichtung 11 eine Bildverarbeitungseinheit 13 zur Verarbeitung von Bildern 14 auf, von denen eines beispielhaft in Fig. 4a) dargestellt ist. Die Bilder 14 werden von der Sensoreinheit 12 basierend auf dem optisch erfassten Bereich erzeugt, wie es z.B. in den Fig. 1, Fig. 2 und Fig. 3 gestrichelt angedeutet ist.

Außerdem weist die Regelungseinrichtung 11 hier und vorzugsweise eine Datenausgabeeinheit 16 auf, die insbesondere eine Anzeigeeinrichtung 17 umfasst und zur optionalen Ausgabe bzw. Anzeige der von der Bildverarbeitungseinheit 13 verarbeiteten Bilder 14 eingesetzt werden kann.

Die landwirtschaftliche Arbeitsmaschine 1 weist nicht dargestellte Sensorvorrichtungen zur Erfassung von Einstellungsparametern des Vorsatzgerätes 2 auf. Diese Einstellungsparameter können sich beispielsweise ausgehend von einer Referenzkoordinate 21 der landwirtschaftliche Arbeitsmaschine 1 auf mehrere Einstellungspositionierungen 22, 23, 24, 25, 26 und 27 der Komponenten des Vorsatzgerätes, wie es in der Fig. 1 angedeutet ist, beziehen.

Die Bildverarbeitungseinheit 13 ist konfiguriert, wie in der Fig. 4b angedeutet, mittels einer zweidimensionalen Projektion eines dreidimensionalen Modells das Vorsatzgerät 2 in den Bildern 14 zu erkennen, wobei die Regelungseinrichtung 11 konfiguriert ist, den erkannten Bildbereich 15 zur Steuerung und/oder Regelung von Prozessabläufen in der landwirtschaftlichen Erntemaschine 1 zu nutzen.

Die Bildverarbeitungseinheit 13 kann dazu konfiguriert sein, Bildbereiche bezüglich optisch nicht erfassbarer, jedoch im Sichtbereich des Bildes 14 positionierter Komponenten des Vorsatzgeräts 2 zu erkennen. Beispielhaft kann die Bildverarbeitungseinheit 13 die in der Fig. 2 dargestellt Tischkante 19 erkennen, obwohl diese während des Erntevorgangs vollständig vom Erntegut überdeckt und daher optisch nicht erfassbar ist. Die Bildverarbeitungseinheit 13 kann dazu konfiguriert sein, die erfasste Tischkante 19 im Bild 14 b) in Fahrrichtung FR in Form wenigstens einer projizierten Tischkante 20 und/oder 20a zu ermitteln, wie es auch in der Fig. 1 angedeutet ist, wobei diese ermittelte, projizierte Tischkante 20 und/oder 20a eine zukünftige Tischkantenposition der Tischkante 19 betrifft.

Die Bildverarbeitungseinheit 13 kann insbesondere dazu konfiguriert sein, bezüglich wenigstens einer Komponente des Vorsatzgeräts 2, insbesondere bezüglich eines Schneidwerkskatenbereiches, basierend auf den von der Sensoreinheit 12 erzeugten Bildern 14 ein Verfahren zur Ermittlung einer Sichtbeeinträchtigung bezüglich Staub und/oder Beleuchtung anzuwenden. Diese Ermittlung einer Sichtbeeinträchtigung bezüglich Staub und/oder Beleuchtung wird beispielsweise dadurch erzielt, dass bei der Ermittlung der Sichtbeeinträchtigung lediglich der Bildbereich des Schneidwerkskatenbereiches verwendet wird.

In der Fig. 4 ist eine Region gleicher Charakteristik im dargestellten und insoweit bevorzugten Ausführungsbeispiel der nicht-abgeerntete Feldbestand 5 in Fahrtrichtung FR vor der Erntegutbergungsanordnung 2. Eine weitere Region gleicher Charakteristik ist hier der abgeerntete Feldbestand 5 in Form des Stoppelfeldes hinter der Erntegutbergungsanordnung 2. Noch eine weitere Region gleicher Charakteristik wird hier von dem Erntegutstrom innerhalb der Erntegutaufnahmevorrichtung 7 in Form der Haspel gebildet. Schließlich wird in dem Ausführungsbeispiel noch eine weitere Region gleicher Charakteristik von dem Erntegutstrom vertikal oberhalb der Erntegutschneidvorrichtung 8 in Form des Schneidwerkstisches, hier in dem Bereich zwischen der Haspel und der Erntegutfördervorrichtung 9 in Form der Förderschnecke gebildet. Diese Regionen sind alle dadurch charakterisiert, dass Biomasse an diesen vorbeiströmt (in Form des Feldbestands während der Fahrt) oder diese von Biomasse durchströmt werden (in Form des Erntegutstroms).

Die Regelungseinrichtung 11 führt außerdem zusätzlich, insbesondere über die Bildverarbeitungseinheit 13, eine Erkennung von Eigenschaften des Erntegutstroms durch von Gutflussgeschwindigkeiten des Erntegutstroms oder Abschnitten davon und/oder von einem Gutstau aus.

### Bezugszeichenliste

- 1: Landwirtschaftliche Arbeitsmaschine
- 2: Vorsatzgerät, insbesondere Erntegutbergungsanordnung
- 3: Schneidwerk
- 4: Erntegut
- 5: Feldbestand
- 6: Weitere Arbeitsorgane
- 7: Erntegutaufnahmevorrichtung
- 8: Erntegutschneidvorrichtung
- 9: Erntegutfördervorrichtung
- 10: Ernteguteinzugsvorrichtung
- 11: Regelungseinrichtung
- 12: Sensoreinheit
- 13: Bildverarbeitungseinheit
- 14: Bild
- 15: Bildbereich
- 16: Datenausgabeeinheit
- 17: Anzeigeeinrichtung
- 18: Schneidwerkskantenbereich
- 19: Tischkante
- 20: Projizierte Tischkante
- 20a: Projizierte Tischkante
- 21: Referenzkoordinate
- 22: Einstellungspositionierung
- 23: Einstellungspositionierung
- 24: Einstellungspositionierung
- 25: Einstellungspositionierung
- 26: Einstellungspositionierung
- 27: Einstellungspositionierung
- 28: Halmteiler
- FR: Fahrtrichtung
- QR: Querachse

## Patentansprüche

1. Landwirtschaftliche Arbeitsmaschine (1), insbesondere selbstfahrende Erntemaschine,
- mit einem Vorsatzgerät (2) zur Durchführung landwirtschaftlicher Arbeit, und
- mit einer Regelungseinrichtung (11), die zumindest eine Sensoreinheit (12) zur sensorischen Erfassung des Vorsatzgerätes (2) und eine Bildverarbeitungseinheit (13) zur Verarbeitung von Bildern (14), die von der Sensoreinheit (12) erzeugt werden, aufweist,
**dadurch gekennzeichnet,**
- **dass** die Bildverarbeitungseinheit (13) konfiguriert ist, mittels einer zweidimensionalen Projektion eines dreidimensionalen Modells des Vorsatzgerätes (2) in den Bildern (14) einen Bildbereich (15) bezüglich des Vorsatzgerätes (2) zu erkennen,
- wobei die Regelungseinrichtung (11) konfiguriert ist, den erkannten Bildbereich (15) zur Steuerung und/oder Regelung von Prozessabläufen in der landwirtschaftlichen Arbeitsmaschine (1) zu nutzen.

2. Landwirtschaftliche Arbeitsmaschine (1) nach Anspruch 1,
**dadurch gekennzeichnet,**
- **dass** das Vorsatzgerät (2) Sensorvorrichtungen zur Erfassung von Einstellungsparametern des Vorsatzgerätes (2) aufweist, und
- die Bildverarbeitungseinheit (13) konfiguriert ist, eine Positionierung des Vorsatzgerätes (2) bezüglich der Sensoreinheit (12) basierend auf den Einstellungsparametern des Vorsatzgerätes (2) zu ermitteln und darauf basierend Komponenten des Vorsatzgeräts (2) mittels der zweidimensionalen Projektion des dreidimensionalen Modells des Vorsatzgerätes (2) für die Regelungseinrichtung (11) zu erkennen.

3. Landwirtschaftliche Arbeitsmaschine (1) nach einem der vorhergehenden Ansprüche,
**dadurch gekennzeichnet,**
**dass** die Bildverarbeitungseinheit (13) konfiguriert ist, einen Bildbereich (15) bezüglich einer Komponente des Vorsatzgeräts (2) und/oder bezüglich eines Teil einer Komponente des Vorsatzgeräts (2) zu erkennen.

4. Landwirtschaftliche Arbeitsmaschine (1) nach einem der vorhergehenden Ansprüche,
**dadurch gekennzeichnet,**
**dass** die Bildverarbeitungseinheit (13) konfiguriert ist, Bildbereiche (15) bezüglich optisch nicht erfassbarer, jedoch im Sichtbereich des Bildes (14) positionierter Komponenten des Vorsatzgeräts (2) zu erkennen.

5. Landwirtschaftliche Arbeitsmaschine (1) nach Anspruch 3 oder 4,
**dadurch gekennzeichnet,**
**dass** die Bildverarbeitungseinheit (13) konfiguriert ist,
- als eine Komponente eine Erntegutaufnahmevorrichtung (7), insbesondere Haspel, des Vorsatzgeräts (2) zu ermitteln und insbesondere als Erntegutaufnahmevorrichtung (7), insbesondere Haspel, zu identifizieren, und/oder
- als eine Komponente eine Erntegutschneidvorrichtung (8), insbesondere einen Schneidwerkstisch, des Vorsatzgeräts (2) zu ermitteln und insbesondere als Erntegutschneidvorrichtung (8), insbesondere Schneidwerkstisch, zu identifizieren, und/oder
- als eine Komponente eine Erntegutfördervorrichtung (9), insbesondere Förderschnecke, des Vorsatzgeräts (2) zu ermitteln und insbesondere als Erntegutfördervorrichtung (9), insbesondere Förderschnecke, zu identifizieren, und/oder
- als eine Komponente eine Ernteguteinzugsvorrichtung (10), insbesondere einen Schrägförderer, des Vorsatzgeräts (2) zu ermitteln und insbesondere als Ernteguteinzugsvorrichtung (10), insbesondere Schrägförderer, zu identifizieren.

6. Landwirtschaftliche Arbeitsmaschine (1) nach einem der vorhergehenden Ansprüche,
**dadurch gekennzeichnet,**
- **dass** das Vorsatzgerät (2) eine Haspel aufweist, und
- das Vorsatzgerät (2) einen Schneidwerkstisch aufweist, und
- das Vorsatzgerät (2) eine Förderschnecke aufweist, und
- das Vorsatzgerät (2) einen Schrägförderer aufweist.

7. Landwirtschaftliche Arbeitsmaschine (1) nach Anspruch 6,
**dadurch gekennzeichnet,**
- **dass** der Schneidwerkstisch ein verstellbarer Schneidwerkstisch ist, und/oder
- **dass** der Schneidwerkstisch einen Messerbalken aufweist.

8. Landwirtschaftliche Arbeitsmaschine (1) nach einem der Ansprüche 2 bis 7,
**dadurch gekennzeichnet,**
- **dass** die Einstellungsparameter des Vorsatzgerätes (2) einen Höhenparameter und/oder Winkelparameter der Ernteguteinzugsvorrichtung (10), insbesondere des Schrägförderers, aufweisen, und/oder
- die Einstellungsparameter des Vorsatzgerätes (2) einen Höhenparameter und/oder Winkelparameter der Erntegutaufnahmevorrichtung (7), insbesondere der Haspel, aufweisen, und/oder
- die Einstellungsparameter des Vorsatzgerätes (2) einen Höhenparameter und/oder Winkelparameter und/oder Längenparameter der Erntegutschneidvorrichtung (8), insbesondere des Schneidwerkstisches und/oder der Schneidwerkskante, aufweisen, und/oder
- die Einstellungsparameter des Vorsatzgerätes (2) einen Höhenparameter und/oder Winkelparameter der Erntegutfördervorrichtung (9), insbesondere der Förderschnecke, aufweisen.

9. Landwirtschaftliche Arbeitsmaschine (1) nach Anspruch 8,
**dadurch gekennzeichnet,**
- **dass** der Winkelparameter einen Längswinkel bezüglich einer Fahrrichtung (FR) der landwirtschaftlichen Arbeitsmaschine (1) aufweist, und/oder
- **dass** der Winkelparameter einen Querwinkel bezüglich einer Querachse (QA) der landwirtschaftlichen Arbeitsmaschine (1) aufweist.

10. Landwirtschaftliche Arbeitsmaschine (1) nach einem der vorhergehenden Ansprüche,
**dadurch gekennzeichnet,**
**dass** die Sensoreinheit (12) zur sensorischen Erfassung eines Erntegutstroms im und/oder um das Vorsatzgerät (2) konfiguriert ist, und die Regelungseinrichtung (11) konfiguriert ist,
- Regionen gleicher Charakteristik,
- Komponenten des Vorsatzgeräts (2) und
- Eigenschaften des Erntegutstroms
zu erkennen, und das jeweils Erkannte zur Steuerung und/oder Regelung von Prozessabläufen in der landwirtschaftlichen Arbeitsmaschine (1) zu nutzen.

11. Landwirtschaftliche Arbeitsmaschine (1) nach einem der vorhergehenden Ansprüche,
**dadurch gekennzeichnet,**
**dass** die Bildverarbeitungseinheit (13) konfiguriert ist, bezüglich wenigstens einer Komponente des Vorsatzgeräts (2) basierend auf den von der Sensoreinheit (12) erzeugten Bildern (14) ein Verfahren zur Ermittlung einer Sichtbeeinträchtigung anzuwenden.

12. Landwirtschaftliche Arbeitsmaschine (1) nach einem der vorhergehenden Ansprüche,
**dadurch gekennzeichnet,**
**dass** die Bildverarbeitungseinheit (13) konfiguriert ist, zur Ermittlung der Regionen und/oder Komponenten und/oder Eigenschaften des Erntegutstroms basierend auf den von der Sensoreinheit (12) erzeugten Bildern (14) ein Verfahren zur Geschwindigkeitskennfeldermittlung anzuwenden.

13. Landwirtschaftliche Arbeitsmaschine (1) nach Anspruch 12,
**dadurch gekennzeichnet,**
**dass** die Bildverarbeitungseinheit (13) konfiguriert ist, bei dem Verfahren der Geschwindigkeitskennfeldermittlung basierend auf den von der Sensoreinheit (12) erzeugten Bildern (14) ein Geschwindigkeitskennfeld zu erzeugen, das Gutflussgeschwindigkeiten und/oder Geschwindigkeiten von Oberflächenabschnitten von Maschinenteilen der Komponenten des Vorsatzgeräts (2) aufweist.

14. Landwirtschaftliche Arbeitsmaschine (1) nach einem der vorhergehenden Ansprüche,
**dadurch gekennzeichnet,**
**dass** die Sensoreinheit (12) zur sensorischen Erfassung des Erntegutstroms und/oder des Vorsatzgeräts (2) mindestens einen optischen Sensor, insbesondere mindestens eine Kamera, und/oder mindestens einen Lidar-, Radar- und/oder Ultraschallsensor aufweist.

15. Bildverarbeitungseinheit (13) für eine landwirtschaftliche Arbeitsmaschine (1) nach einem der vorhergehenden Ansprüche.
